# FASCICULE DE BREVET EUROPEEN

(11) **EP 3 543 105 B1**
(45) Date de publication et mention de la délivrance du brevet: **01.06.2022**
(21) Numéro de dépôt: 19162935.1
(22) Date de dépôt: 14.03.2019
(51) Int. Cl.: B62M 6/90, B62K 19/30

(54) **BICYCLETTE ELECTRIQUE**
E-BIKE
ELECTRIC BICYCLE

(30) Priorité: 20.03.2018 BE 201805188
(43) Date de publication de la demande: 25.09.2019
(73) Titulaire: Cowboy, 1000 Bruxelles (BE)
(72) Inventeur: SLAOUI, Karim, 1050 Ixelles (BE); ROOSE, Adrien, 1190 Forest (BE); GORETTI, Tanguy, 1020 Laeken (BE)
(74) Mandataire: ABYOO

(56) Documents cités:
- EP-A1- 0 262 487
- WO-A1-2015/011646
- CN-A- 108 639 227
- CN-U- 201 856 877
- CN-U- 205 059 925
- JP-A- 2005 080 490
- JP-A- 2012 176 714
- US-A1- 2017 096 190

## Description

### Domaine de l'invention

L'invention se situe dans le domaine des bicyclettes électriques, notamment dans les systèmes de fixation d'une batterie sur un élément de cadre d'une bicyclette électrique.

### État de la technique

Une bicyclette électrique, ou également appelée bicyclette à assistance électrique, est une bicyclette équipée d'un moteur électrique auxiliaire et d'une batterie rechargeable. Le moteur a pour fonction de fournir un complément au pédalage. Dans la grande majorité des cas, les bicyclettes électriques sont pourvues d'une batterie rechargeable amovible. Cela offre plusieurs avantages, tels que la possibilité de recharger la batterie en dehors de la bicyclette, de la remplacer lorsqu'elle arrive en fin de vie, ou de prévenir un vol.

Il est donc souhaitable de trouver un système de fixation de la batterie dans le cadre de la bicyclette de manière à ce qu'elle soit facile à monter et à démonter, et qu'elle puisse être montée de façon à ne pas engendrer de restrictions à la mobilité de l'utilisateur lors du pédalage. Par ailleurs, pour des raisons de style et de confort, il est intéressant que la batterie soit aussi peu visible que possible et légère de sorte à ne pas alourdir la bicyclette de manière trop importante.

Il est connu de monter une batterie ou un ensemble de batteries dans ou sur le cadre des bicyclettes. Le document EP1982909 décrit une bicyclette électrique comprenant une batterie pourvue d'un bouchon. Le bouchon est fixé sur une partie supérieure de la batterie et est apte à coopérer en vue d'être fixé dans un cadre d'emboîtement de bicyclette, le cadre étant situé dans un tube s'étendant entre le tube de direction et le tube de selle. Néanmoins, une telle solution a le désavantage de nécessiter la présence des pièces supplémentaires, telles que le bouchon et le cadre d'emboîtement. Une solution plus simple reste à trouver.

Le document DE202013008187 propose un ensemble comprenant un bloc-batterie et un élément de cadre, l'élément de cadre comprend une empreinte découpée dans une surface plane pour recevoir ledit bloc-batterie. Le bloc-batterie présente une poignée pour sa manipulation. Un verrou est prévu dans le cadre de la bicyclette pour la fixation dudit bloc-batterie. Or, il serait intéressant de s'affranchir de la présence des moyens de fixation apparents, par exemple sur les interfaces visibles du bloc-batterie et du cadre de bicyclette.

Le document WO2017028837 propose une bicyclette comprenant un bloc-batterie et un tube oblique dont, après montage, les moyens de fixation ne sont pas apparents à l'œil nu. Dans ce cas, le montage du bloc-batterie dans le tube oblique repose sur la complémentarité des formes de ces deux pièces au niveau de leurs extrémités supérieure et inférieure, l'élément de cadre ayant une forme spécialement conçue pour recevoir le bloc-batterie. Le cadre présente des moyens de verrouillage du bloc-batterie. Néanmoins, la présence de tels systèmes de verrouillage dans le cadre de la bicyclette rend plus complexe sa production et en augmente donc les coûts.

Le document EP2409907 décrit également un ensemble comprenant un bloc-batterie et un élément de cadre, ledit élément de cadre comprenant un évidemment en forme de U. Le bloc-batterie a donc une forme complémentaire destinée à être reçue dans ledit élément. D'un point de vue esthétique, l'ensemble ne comprend pas de moyens de fixation apparents. Cependant, cette configuration n'est pas avantageuse en ce qu'une grande partie du corps du bloc-batterie se trouve à l'extérieur dudit évidemment, ce qui pourrait entraîner le décrochage dudit bloc-batterie lors d'une manœuvre brusque.

Le document CN201856877U décrit une bicyclette électrique comprenant une batterie pouvant être fixée au cadre de la bicyclette au moyen d'un mécanisme comportant trois pièces : une première pièce fixée sur le cadre, une deuxième pièce mobile montée sur la batterie et une troisième pièce venant se placer par au-dessus de la batterie et coopérant avec les deux autres pièces. Ce mécanisme est complexe, peu pratique à mettre en œuvre par l'utilisateur et ne présente pas de sécurité suffisante contre une personne mal intentionnée voulant voler la batterie. Le document CN201856877U décrit une bicyclette électrique selon le préambule de la revendication 1.

### Résumé de l'invention

L'invention a pour objectif d'apporter une réponse à au moins un des inconvénients rencontrés dans l'art antérieur en proposant une bicyclette électrique comprenant un bloc-batterie amovible configuré pour permettre un montage facile dudit bloc-batterie et un verrouillage fiable et sans risque de décrochage. Un des objectifs de l'invention est également de proposer une bicyclette électrique de conception simple et économique, qui soit esthétique en ce que les moyens de fixation dudit bloc-batterie ne sont pas apparents.

L'invention est définie par les revendications indépendantes. Les revendications dépendantes définissent des modes de réalisation préférés de l'invention.

A cet effet, l'invention concerne une bicyclette électrique comprenant un bloc-batterie amovible pour le stockage d'énergie électrique, et un élément de cadre sur lequel le bloc-batterie est destiné à être fixé, la bicyclette étant remarquable en ce que le bloc-batterie comprend un logement et des moyens de verrouillage agencés dans ledit logement et en ce que l'élément de cadre comprend un élément de verrouillage saillant, ledit élément de verrouillage pénétrant dans le logement du bloc-batterie par une ouverture d'entrée afin de coopérer avec lesdits moyens de verrouillage en vue de la fixation dudit bloc-batterie sur ledit élément de cadre.

Comme on l'aura compris à la lecture de la définition qui vient d'en être donnée, l'invention propose une bicyclette dont les pièces mobiles des moyens de verrouillage du bloc-batterie sont disposées dans le bloc-batterie et non pas sur le cadre. Ce faisant, l'invention simplifie la conception du cadre de la bicyclette et en diminue donc les coûts de production. Par ailleurs, en proposant que l'élément de verrouillage présent sur le cadre pénètre dans le bloc-batterie pour la fixation dudit bloc-batterie, l'invention va masquer l'interface de verrouillage entre le cadre et le bloc-batterie répondant ainsi aux contraintes esthétiques évoquées plus haut.

Selon l'invention, les moyens de verrouillage du bloc-batterie comprennent un pêne déplaçable entre une position de verrouillage et une position de dégagement, et l'élément de verrouillage saillant se présente sous forme d'une langue présentant une extrémité libre et montrant un ajour au niveau de son extrémité libre de sorte à former une gâche destinée à coopérer avec ledit pêne lorsqu'il est en position de verrouillage. Les éléments mobiles pour la fixation du bloc-batterie sur l'élément de cadre sont donc situés dans le bloc-batterie.

L'élément de cadre comprend un profilé ayant la forme d'une gouttière dont la cavité est destinée à recevoir le bloc-batterie et l'élément de verrouillage est positionné au fond de ladite cavité. L'élément de cadre est un tube de selle et ledit profilé est ouvert en direction de l'arrière de ladite bicyclette.

### Brève description des figures

L'invention sera bien comprise et d'autres aspects et avantages apparaîtront clairement à la vue de la description qui suit donnée en références aux planches de dessins annexées sur lesquelles
- La figure 1 est une représentation schématique partielle selon une coupe longitudinale d'un bloc-batterie selon l'invention.
- La figure 2 illustre l'agencement d'un bloc-batterie et d'un élément de cadre lors de la fixation du bloc-batterie sur ledit élément de cadre.
- La figure 3 est une vue similaire à la figure 2 selon un autre point de vue.
- La figure 4 est une vue de la partie arrière d'une bicyclette électrique selon l'invention comprenant un bloc-batterie fixé sur le tube de selle.

Les dessins des figures ne sont ni à l'échelle, ni proportionnés. Généralement, des éléments semblables ou identiques sont dénotés par des références identiques dans les figures.

### Description détaillée de modes de réalisation de l'invention

Dans la description qui suit, le terme « comprendre » est synonyme de « inclure » et n'est pas limitatif en ce qu'il autorise la présence d'autres éléments dans la bicyclette, le bloc-batterie ou le cadre auquel il fait référence. Il est entendu que le terme « comprendre » inclut les termes « consister en ». Les termes « avant » et « arrière » s'entendront par rapport à l'orientation générale de la bicyclette. Sur les différentes figures, les mêmes références désignent des éléments identiques ou similaires.

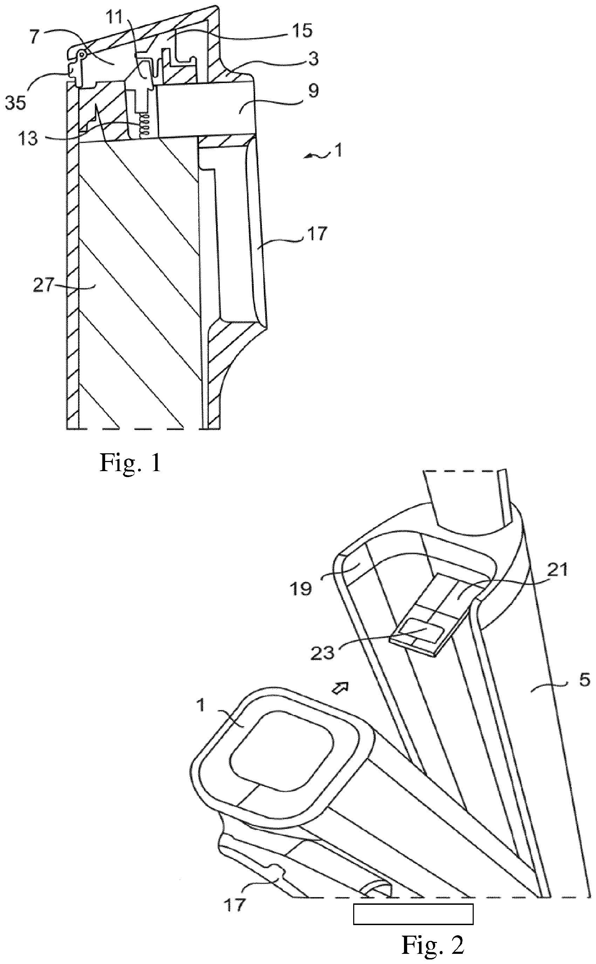

L'invention concerne une bicyclette électrique comprenant un bloc-batterie amovible pour le stockage d'énergie électrique, et un élément de cadre sur lequel le bloc-batterie est destiné à être fixé. Le bloc-batterie 1 est représenté partiellement en figure 1 selon une coupe longitudinale. Le bloc-batterie 1 représente la source d'alimentation électrique de la bicyclette. Ainsi, il est intéressant qu'il soit monté de manière amovible sur le cadre de la bicyclette pour lui permettre d'être rechargé par une source d'alimentation électrique externe. Le bloc-batterie 1 a avantageusement un bon rapport performance/poids. Par exemple, celui-ci correspond à une pluralité d'éléments 27 de stockage d'énergie à base de lithium.

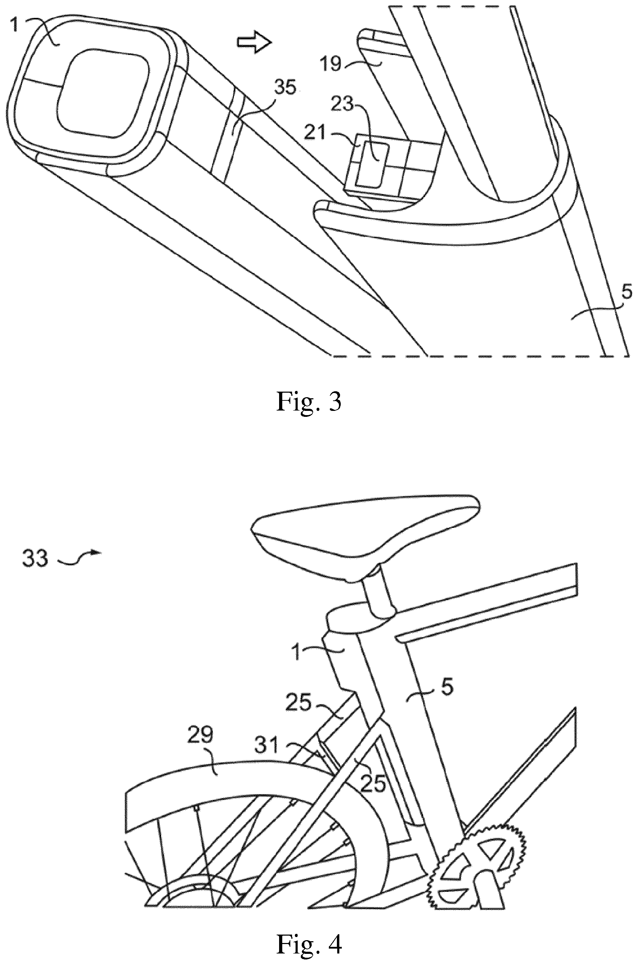

Selon un mode de réalisation préféré de l'invention, le bloc-batterie 1 comprend un corps 3 comprenant les éléments 27 de stockage d'énergie, un logement 7 et des moyens de verrouillage agencés dans ledit logement et destinés à coopérer avec un élément de verrouillage 21 (visible sur les figures 2 et 3) présent sur un élément de cadre 5 (visible sur les figures 2 et 3) de ladite bicyclette, en vue de la fixation dudit bloc-batterie 1 sur ledit élément de cadre 5. La fixation se fait par pénétration de l'élément de verrouillage 21 dans ledit logement 7 en vue de sa coopération avec les moyens de verrouillage. Comme on peut le voir en figure 2, l'élément de verrouillage 21 se présente sous forme d'une langue comprenant un ajour 23 à son extrémité libre de sorte à former une gâche. De manière avantageuse, l'élément de verrouillage 21 est fixé sur l'élément de cadre 5 par vissage, mais l'homme du métier pourra envisager d'autres types de fixation, par exemple par soudage, par clippage ou par collage. Il est également possible qu'il soit venu de matière avec l'élément de cadre 5. Selon un mode de réalisation préféré de l'invention, l'élément de verrouillage 21 est vissé à l'élément de cadre 5. Ce mode d'assemblage est particulièrement avantageux car il est répétable et il assure un degré de tolérance en ce qu'il permet de réajuster la position du moyen de fixation 21 sur ledit élément de cadre 5.

Selon l'invention, les moyens de verrouillage du bloc-batterie comprennent un pêne 11 déplaçable entre une position de verrouillage et une position de dégagement. En position de verrouillage, le pêne 11 pénètre dans l'ajour 23 de l'élément de verrouillage 21 de sorte à fixer le bloc-batterie en position sur l'élément de cadre 5. En position de dégagement, le pêne 11 est dégagé de l'ajour 23 de l'élément de verrouillage 21 autorisant ainsi un mouvement translation de l'élément de verrouillage 21 dans le logement 7 en vue du retrait du bloc-batterie 1.

Avantageusement, le pêne 11 est associé à des moyens élastiques 13, par exemple un ressort. Selon l'invention, les moyens élastiques 13 sont agencés pour ramener le pêne 11 à sa position de verrouillage. Au repos, le pêne 11 est donc en position de verrouillage, il présente avantageusement une forme biseautée avec une face en biseau configurée pour coopérer avec l'extrémité libre de l'élément de verrouillage 21 lorsque ledit élément de verrouillage 21 est enfoncé dans le logement 7. Le pêne 11 est alors progressivement déplacé en position de dégagement pour se placer à nouveau en position de verrouillage lorsque l'ajour 23 de l'élément de verrouillage 21 est aligné avec l'extrémité libre du pêne 11. Le bloc-batterie est alors fixé sur l'élément de cadre 5.

Si la fixation du bloc-batterie s'opère passivement, sa libération demandera préférentiellement une démarche active de la part de l'utilisateur de la bicyclette. Ainsi de préférence, le pêne 11 est déplacé jusqu'à sa position de dégagement par le biais d'un verrou ou au moyen d'une serrure 9 à clef ou à combinaison. Les moyens de coopération entre le pêne et la serrure ne sont pas représentés sur la figure 1, mais sont bien connus de l'homme du métier, de préférence au moyen d'une serrure 9. Les moyens d'actionnement du verrou ou de la serrure sont donc disposés sur une des faces visibles du bloc-batterie lorsque ce dernier est fixé sur l'élément de cadre 5. Par exemple, ils sont agencés sur la face du bloc-batterie 1 opposée à celle présentant l'ouverture du logement 7 par lequel est inséré l'élément de verrouillage 21 saillant.

Selon un mode de réalisation préférentiel, le logement 7 présente en outre un élément élastique 15 disposé au fond du logement 7 de sorte à être placé en regard de l'ouverture d'entrée du logement 7 par lequel pénètre l'élément de verrouillage 21. L'élément élastique 15 est fixé en position dans le logement 7. Aussi, l'élément de verrouillage 21 vient se placer en butée contre ledit élément élastique 15 lorsqu'il est inséré dans le logement 7 et comprime ledit élément élastique 15.

Avantageusement, l'élément élastique est un élément en matériau élastomère choisi parmi les silicones, les terpolymères d'éthylène de propylène et d'un diène (EPDM), les élastomères thermoplastiques (TPE), les copolymères styrène-butadiène (SBR) ou les latex. De préférence, l'élément élastique est en silicone.

La compression de l'élément élastique peut être associée à une déformation d'au moins une partie de ce dernier par enfoncement de ladite partie dans un espace vide disposé en arrière de ladite partie de l'élément élastique 15 selon la direction d'enfoncement de l'élément de verrouillage 21, comme illustré en figure 1.

La présence d'un élément élastique 15 dans le logement 7 du bloc-batterie 1 présente deux intérêts principaux. Un premier intérêt est la diminution des vibrations dues au roulage de la bicyclette et donc des bruits et de l'usure qui pourraient en résulter. D'autre part, l'élément élastique va faciliter le déverrouillage du bloc-batterie 1 en exerçant une pression sur l'extrémité libre dudit élément de verrouillage 21 en vue de l'éjecter au moins partiellement hors dudit logement 7 lorsque le pêne 11 est placé en position de dégagement par actionnement d'une serrure 9 ou d'un verrou. On aura compris que lorsque le pêne 11 est amené en position de dégagement, l'élément élastique 15 va exercer une poussée sur l'extrémité libre de l'élément de verrouillage 21 de sorte à ce que son ajour 23 ne soit plus aligné avec le pêne 11. Lorsque l'utilisateur relâche la serrure ou le verrou, le pêne 11 est ramené à sa position de verrouillage par ses moyens élastiques 13, mais il ne s'engage plus dans l'ajour 23 de l'élément de verrouillage. La face en biseau du pêne 11 va contribuer à pousser encore davantage l'élément de verrouillage 21 hors du logement 7. Ceci aura pour effet d'incliner le bloc-batterie 1 dans le profilé 19 qui le reçoit au niveau d'une de ses extrémités, facilitant ainsi sa prise en main par l'utilisateur.

De manière optionnelle, l'ouverture d'entrée du logement 7 présente un clapet 35 déplaçable entre une position de dégagement de l'ouverture d'entrée et une position d'obturation de ladite ouverture d'entrée par pivotement en direction de l'intérieur du logement 7. Ledit clapet 35 est préférentiellement associé à des moyens élastiques de rappel le ramenant en position d'obturation. Ainsi, le clapet se déplace vers l'intérieur du logement 7 lorsque le bloc-batterie 1 est monté dans l'élément de cadre 5 et il revient dans sa position initiale lors du démontage des deux pièces (1, 5).

Selon une variante de l'invention, le bloc-batterie comprend en outre une lampe de signalisation 17 et/ou un réflecteur de type catadioptre. De préférence, la bicyclette est configurée pour que la lampe de signalisation 17 soit alimentée en énergie électrique par le bloc-batterie. Cette configuration implique une implantation du bloc-batterie 1 dans le tube de selle. Cela est particulièrement avantageux car, d'un côté, il n'y a pas besoin de rajouter une pièce supplémentaire sur le cadre de la bicyclette pour monter ladite lampe, permettant ainsi d'obtenir un cadre ayant un poids total plus léger et, de l'autre côté, la proximité de la lampe 17 et des éléments 27 de stockage d'énergie évite d'employer des câbles supplémentaires pour l'alimenter en énergie électrique.

Comme illustré en figures 2 et 3 l'élément de cadre 5 de bicyclette comprend un profilé 19 ayant la forme d'une gouttière dont la cavité est destinée à recevoir le bloc-batterie et l'élément de verrouillage 21 est positionné au fond de ladite cavité. Comme illustré en figure 4, l'élément de cadre 5 de bicyclette 33 est le tube de selle et ledit profilé 19 est ouvert en direction de l'arrière de ladite bicyclette 33. Avantageusement, le profilé 19 se situe selon une direction parallèle à la tige de selle montée de manière amovible ou non à l'intérieur dudit tube. Cette configuration permet à ce que le tube de selle ait une double fonction : recevoir la tige de selle et le bloc-batterie.

De préférence, l'élément de cadre 5 est un tube de selle obtenu par extrusion. Cette configuration particulière est intéressante car, dans la grande majorité des bicyclettes, le tube de selle peut être connecté au moyeu au travers des deux haubans 25 selon la direction longitudinale de la bicyclette, les deux haubans 25 étant reliés à leur tour par une tige de liaison. Or, cette tige de liaison 31 est située entre le tube de selle et la roue arrière 29 de la bicyclette 33, ce qui confère une protection supplémentaire au bloc-batterie 1. Lors du démontage, suite à son éjection depuis le tube de selle, le bloc-batterie 1 est retenu par ladite tige de liaison 31. Ainsi, le bloc-batterie 1 ne risque pas de tomber sur le sol et de s'abîmer.

De préférence, le bloc-batterie 1 comprend des moyens de connexion électrique (non représentés) aptes à coopérer avec un équipement électrique situé sur le cadre de bicyclette pour transmettre l'énergie depuis ledit bloc-batterie et alimenter le moteur électrique. De préférence le bloc-batterie 1 présente une forme allongée comprenant deux extrémités opposées, les moyens de connexion électrique sont agencés à une des extrémités du bloc-batterie et les moyens de verrouillage à l'extrémité opposée du bloc-batterie.

Comme on l'aura compris, le montage du bloc-batterie 1 dans l'élément de cadre 5 s'effectue comme suit : ledit bloc-batterie 1 est placé dans le profilé 19 en positionnant l'extrémité comprenant les moyens de connexion électrique contre les moyens de connexion complémentaires portés par l'élément de cadre 5. Le bloc-batterie 1 est alors pivoté en direction du fond de la gouttière formée par le profilé, de sorte à ce que l'élément de verrouillage 21 se place en regard de l'ouverture d'entrée du logement puis y pénètre.

Le démontage du bloc-batterie 1 s'effectue de la manière suivante. L'utilisateur actionne la serrure 9 par exemple à l'aide d'une clef. Le ressort 13 est alors comprimé, le pêne 11 sera déplacé vers l'intérieur du boîtier 9, l'élément élastique 15 libère la force emmagasinée et pousse l'élément de verrouillage 21 au moins partiellement en dehors du logement 7, facilitant ainsi la préhension du bloc-batterie 1 par l'utilisateur, puisque ledit bloc-batterie s'incline et sort partiellement de la gouttière dans laquelle il est reçu.

La présente invention a été décrite en relation avec des modes de réalisations spécifiques, qui ont une valeur purement illustrative et ne doivent pas être considérés comme limitatifs. D'une manière générale, il apparaîtra évident pour l'homme du métier que la présente invention n'est pas limités aux exemples illustrés et/ou décrits ci-dessus. La présence de numéros de référence aux dessins ne peut être considérée comme limitative, y compris lorsque ces numéros sont indiqués dans les revendications.

L'usage des verbes « comprendre », « inclure », « comporter », ou toute autre variante, ainsi que leurs conjugaisons, ne peut en aucune façon exclure la présence d'éléments autres que ceux mentionnés.

L'usage de l'article indéfini « un », « une », ou de l'article défini « le », « la » ou « l' », pour introduire un élément n'exclut pas la présence d'une pluralité de ces éléments.

## Revendications

1. Bicyclette électrique (33) comprenant un bloc-batterie (1) amovible pour le stockage d'énergie électrique, et un tube de selle (5) sur lequel le bloc-batterie (1) est destiné à être fixé, le bloc-batterie comprend un logement (7) et des moyens de verrouillage (11) agencés dans ledit logement (7), le tube de selle (5) comprend un élément de verrouillage (21) saillant relié de manière fixe au tube de selle, ledit élément de verrouillage (21) est apte à pénétrer dans le logement (7) du bloc-batterie (1) par une ouverture d'entrée afin de coopérer avec lesdits moyens de verrouillage (11) pour fixer ledit bloc-batterie (1) sur ledit tube de selle (5), **caractérisée en ce que** le tube de selle (5) comprend un profilé (19) ayant la forme d'une gouttière dont la cavité est destinée à recevoir le bloc-batterie (1), **en ce que** l'élément de verrouillage (21) est positionné au fond de ladite cavité, **en ce que** ledit profilé (19) est ouvert en direction de l'arrière de ladite bicyclette, **en ce que** les moyens de verrouillage (11) du bloc-batterie (1) comprennent un pêne (11) déplaçable entre une position de verrouillage et une position de dégagement, et **en ce que** l'élément de verrouillage (21) saillant se présente sous forme d'une langue présentant une extrémité libre, et montrant un ajour (23) au niveau de son extrémité libre de sorte à former une gâche destinée à coopérer avec ledit pêne (11) lorsqu'il est en position de verrouillage.

2. Bicyclette électrique (33) selon la revendication 1, **caractérisée en ce que** l'axe de la gouttière est parallèle à l'axe du tube de selle.

3. Bicyclette (33) selon la revendication 1 ou 2, **caractérisée en ce que** le pêne (11) est associé à des moyens élastiques (13), et **en ce que** les moyens élastiques (13) sont agencés pour ramener le pêne (11) à sa position de verrouillage.

4. Bicyclette (33) selon la revendication 3, **caractérisée en ce que** le pêne (11) a une forme biseautée configurée pour coopérer avec l'extrémité de l'élément de verrouillage (21) afin de permettre audit pêne (11) de pénétrer dans ledit ajour (23) de l'élément de verrouillage (21) lorsque l'élément de verrouillage (21) est enfoncé dans le logement (7) du bloc-batterie (1).

5. Bicyclette (33) selon l'une des revendications 1 à 4, **caractérisée en ce que** les moyens de verrouillage comprennent un verrou, ou une serrure (9) à clef ou à combinaison, configurés pour déplacer le pêne (11) depuis sa position de verrouillage jusqu'à sa position de dégagement.

6. Bicyclette (33) selon l'une des revendications 1 à 5, **caractérisée en ce que** le logement (7) présente en outre un élément élastique (15) agencé
- pour être comprimé lorsque l'élément de verrouillage (21) est inséré dans ledit logement (7) et coopère avec le pêne (11) placé en position de verrouillage, et
- pour exercer une pression sur ledit élément de verrouillage (21) en vue de l'éjecter au moins partiellement hors dudit logement (7) lorsque le pêne (11) est placé en position de dégagement; de préférence, l'élément élastique (15) est en silicone.

7. Bicyclette (33) selon l'une des revendications 1 à 6, **caractérisée en ce que** l'ouverture d'entrée du logement (7) présente un clapet (35) déplaçable entre une position de dégagement de l'ouverture d'entrée et une position d'obturation de ladite ouverture d'entrée par pivotement en direction de l'intérieur du logement (7), de préférence, ledit clapet (35) est associé à des moyens élastiques de rappel le ramenant en position d'obturation.

8. Bicyclette (33) selon l'une des revendications 1 à 7 **caractérisée** ce que ledit élément de verrouillage (21) est fixé sur le tube de selle (5) par vissage.

9. Bicyclette (33) selon l'une des revendications 1 à 8, la bicyclette comprenant un moteur électrique et étant **caractérisée en ce que** le bloc-batterie (1) comprend des moyens de connexion électrique aptes à coopérer avec un équipement électrique situé sur le cadre de la bicyclette pour transmettre l'énergie depuis ledit bloc-batterie (1) et alimenter le moteur électrique.

10. Bicyclette (33) selon la revendication 9, **caractérisée en ce que** le bloc-batterie (1) présente une forme allongée comprenant deux extrémités opposées, **en ce que** les moyens de connexion électrique sont agencés à une des extrémités du bloc-batterie (1), et **en ce que** les moyens de verrouillage (11) sont agencés à l'extrémité opposée du bloc-batterie (1).

## Patentansprüche

1. Elektrisches Fahrrad (33), umfassend einen abnehmbaren Ackublock (1) zum Speichern von elektrischer Energie und ein Sattelrohr (5), auf dem der Akkublock (1) befestigt werden soll, wobei der Akkublock eine Aufnahme (7) und Verriegelungsmittel (11) umfasst, die in der genannten Aufnahme (7) angeordnet sind, das Sattelrohr (5) ein hervorstehendes Verriegelungselement (21) umfasst, das fest am Sattelrohr befestigt ist, wobei das genannte Verriegelungselement (21) geeignet ist, in die Aufnahme (7) des Akkublocks (1) durch eine Eingangsöffnung einzudringen, um mit den genannten Verriegelungsmitteln (11) zusammenzuwirken, um den genannten Akkublock (1) auf dem genannten Sattelrohr (5) zu befestigen, **dadurch gekennzeichnet, dass** das Sattelrohr(5) ein Profil (19) umfasst, das die Form einer Rinne aufweist, deren Ausnehmung zum Aufnehmen des Akkublocks (1) bestimmt ist, dass das Verriegelungselement (21) am Boden der genannten Ausnehmung angeordnet ist, dass das genannte Profil (19) in Richtung der Rückseite des genannten Fahrrads offen ist, dass die Verriegelungsmittel (11) des Akkublocks (1) einen Riegel (11) umfassen, der zwischen einer Verriegelungsposition und einer Löseposition verschiebbar ist, und dass das hervorstehende Verriegelungselement (21) die Form einer Zunge aufweist, die ein freies Ende aufweist, und einen Durchbruch (23) an seinem freien Ende derart aufweist, dass ein Schließblech gebildet ist, das zum Zusammenwirken mit dem genannten Riegel (11) bestimmt ist, wenn er in Verriegelungsposition ist.

2. Elektrisches Fahrrad (33) gemäß Anspruch 1, **dadurch gekennzeichnet, dass** die Achse der Rinne parallel zur Achse des Sattelrohrs ist.

3. Fahrrad (33) gemäß Anspruch 1 oder 2, **dadurch gekennzeichnet, dass** der Riegel (11) elastischen Mitteln (13) zugeordnet ist und dass die elastischen Mittel (13) angeordnet sind, um den Riegel (11) in seine Verriegelungsposition zurückzubringen.

4. Fahrrad (33) gemäß Anspruch 3, **dadurch gekennzeichnet, dass** der Riegel (11) eine abgefaste Form aufweist, die ausgestaltet ist, um mit dem Ende des Verriegelungselements (21) zusammenzuwirken, um dem genannten Riegel (11) das Eindringen in den genannten Durchbruch (23) des Verriegelungselements (21) zu ermöglichen, wenn das Verriegelungselement (21) in die Aufnahme (7) des Akkublocks (1) eingedrückt ist.

5. Fahrrad (33) gemäß einem der Ansprüche 1 bis 4, **dadurch gekennzeichnet, dass** die Verriegelungsmittel eine Klinke oder ein Schloss (9) mit Schlüssel oder Kombination umfassen, die ausgestaltet sind, um den Riegel (11) aus seiner Verriegelungsposition bis in seiner Löseposition zu verschieben.

6. Fahrrad (33) gemäß einem der Ansprüche 1 bis 5, **dadurch gekennzeichnet, dass** die Aufnahme (7) darüber hinaus ein elastisches Element (15) aufweist, das angeordnet ist,
- um komprimiert zu sein, wenn das Verriegelungselement (21) in die genannte Aufnahme (7) eingeführt ist und mit dem Riegel (11) zusammenwirkt, der in die Verriegelungsposition gebracht ist, und
- um einen Druck auf das genannte Verriegelungselement (21) auszuüben, um es wenigstens teilweise aus der genannten Aufnahme (7) herauszustoßen, wenn der Riegel (11) in die Löseposition gebracht ist; das elastische Element (15) ist bevorzugt aus Silikon.

7. Fahrrad (33) gemäß einem der Ansprüche 1 bis 6, **dadurch gekennzeichnet, dass** die Eingangsöffnung der Aufnahme (7) eine Klappe (35) aufweist, die zwischen einer Löseposition der Eingangsöffnung und einer Verschlussposition der genannten Eingangsöffnung per Schwenken in Richtung des Innern der Aufnahme (7) verschiebbar ist, die genannte Klappe (35) bevorzugt elastischen Rückholmitteln zugeordnet ist, die sie in die Verschlussposition zurückbringen.

8. Fahrrad (33) gemäß einem der Ansprüche 1 bis 7, **dadurch gekennzeichnet, dass** das genannte Verriegelungselement (21) auf dem Sattelrohr (5) per Verschraubung befestigt ist.

9. Fahrrad (33) gemäß einem der Ansprüche 1 bis 8, wobei das Fahrrad einen Elektromotor umfasst und **dadurch gekennzeichnet ist, dass** der Akkublock (1) elektrische Anschlussmittel umfasst, die geeignet sind, mit einer auf dem Rahmen des Fahrrads angeordneten elektrischen Ausrüstung zusammenzuwirken, um die Energie von dem genannten Akkublock (1) zu übertragen und den Elektromotor zu versorgen.

10. Fahrrad (33) gemäß Anspruch 9, **dadurch gekennzeichnet, dass** der Akkublock (1) eine längliche Form aufweist, umfassend zwei entgegengesetzte Enden, dass die elektrischen Anschlussmittel an einem der Enden des Akkublocks (1) angeordnet sind und dass die Verriegelungsmittel (11) am entgegengesetzten Ende des Akkublocks (1) angeordnet sind.

## Claims

1. Electric bicycle (33) including a removable battery pack (1) for the storage of electrical energy, and a seat tube (5) on which the battery pack (1) is to be fixed, the battery pack comprises a housing (7) and means of locking (11) arranged in the said housing (7), the seat tube (5) comprises a projecting locking element (21) that is permanently attached to the seat tube, the said locking element (21) can penetrate the housing (7) of the battery pack (1) through an entry opening in order to cooperate with the said means of locking (11) to fix the said battery pack (11) on the said seat tube (5), **characterised in that** the seat tube (5) comprises a section (19) having the shape of a gutter whose cavity is intended to receive the battery pack (1), **in that** the locking element (21) is positioned at the bottom of the said cavity, **in that** the said section (19) is open towards the back of the said bicycle, **in that** the means of locking (11) of the battery pack (1) comprise a bolt (11) that moves between a locked position and an unlocked position, **in that** the projecting locking element (21) is in the form of a strip with a free end-point, and has a slot (23) at its free end-point so as to form a strike intended to work with the said bolt (11) when it is in the locked position.

2. Electric bicycle (33) according to claim 1, **characterised in that** the axis of the gutter is parallel to the axis of the seat tube.

3. Bicycle (33) according to claim 1 or 2, **characterised in that** the bolt (11) is connected to elastic means (13), and **in that** the elastic means (13) are arranged to bring the bolt (11) back to its locked position.

4. Bicycle (33) according to claim 3, **characterised in that** the bolt (11) has a bevelled form configured to cooperate with the end-point of the locking element (21) in order to allow the said bolt (11) to penetrate the said slot (23) of the locking element (21) when the locking element (21) is sunk into the housing (7) of the battery pack (1).

5. Bicycle (33) according to any one of the claims 1 to 4, **characterised in that** the means of locking comprise a lock, or a key lock (9) or combination lock, configured to move the bolt (11) from its locked position to its unlocked position.

6. Bicycle (33) according to any one of the claims 1 to 5, **characterised in that** the housing (7) also has an elastic element (15) arranged
- to be compressed when the locking element (21) is inserted in the said housing (7) and works with the bolt (11) placed in the locked position, and
- to exert pressure on the said locking element (21) to eject it at least partially from the said housing (7) when the bolt (11) is placed in the unlocked position; preferably, the elastic element (15) is made of silicon.

7. Bicycle (33) according to any one of the claims 1 to 6, **characterised in that** the entry opening of the housing (7) has a movable valve (35) between an unlocked position of the entry opening and a blocked position of the said entry opening by rotating towards the inside of the housing (7), preferable, the said valve (35) is connected to elastic return means bringing it back to the blocked position.

8. Bicycle (33) according to any one of the claims 1 to 7, **characterised in that** the said locking element (21) is fixed on the seat tube (5) by screwing.

9. Bicycle (33) according to any one of the claims 1 to 8, the bicycle comprising an electric motor and being **characterised in that** the battery pack (1) comprises means of electrical connection compatible with a piece of electrical equipment located on the frame of the bicycle to transmit power from the said battery pack (1) and supply power to the electric motor.

10. Bicycle (33) according to claim 9, **characterised in that** the battery pack (1) has an elongated shape comprising two opposite end-points, **in that** the means of electrical connection are arranged at one of the end-points of the battery pack (1), and **in that** the means of locking (11) are arranged at the opposite end-point of the battery pack (1).
